# EUROPEAN PATENT APPLICATION

(11) **EP 4 387 049 A1**
(43) Date of publication of application: **19.06.2024**
(21) Application number: 21956361.6
(22) Date of filing: 09.09.2021
(51) Int. Cl.: H02J 50/60, H02J 50/90, B60L 53/10, B60L 53/126, B60L 53/38

(54) **WIRELESS CHARGING PANEL, OFFSET DETECTION METHOD FOR WIRELESS CHARGING PANEL, AND WIRELESS CHARGING SYSTEM**

(71) Applicant: Huawei Digital Power Technologies Co., Ltd., Shenzhen, Guangdong 518043 (CN)
(72) Inventor: GAO, Jing, Shenzhen, Guangdong 518129 (CN)
(74) Representative: Huawei European IPR
(86) International application number: PCT/CN2021/117410
(87) International publication number: WO 2023/035175

(57) **Abstract**

This application provides a wireless charging board, a wireless charging board misalignment detection method, and a wireless charging system. The wireless charging board includes a power transmitting coil, a detection circuit, a plurality of metal induction coils, and a processor. Each metal induction coil disposed on a second plane in the wireless charging board detects, through induction, whether a metal exists right above the metal induction coil, and generates an induced electrical signal. The processor determines a first detection matrix based on the induced electrical signal generated by each metal induction coil, determines a relative position of the wireless charging board to a chassis of a target vehicle in a chassis metal detection matrix of the target vehicle based on the first detection matrix, and determines charging position misalignment information of the wireless charging board based on the relative position of the wireless charging board to the chassis of the target vehicle. According to this application, an adjustment range during alignment between a target charging working region and the wireless charging board can be expanded, thereby ensuring that a sufficient adjustment space is left for a driver, and achieving high applicability.

## Description

### TECHNICAL FIELD

This application relates to the field of wireless charging technologies, and in particular, to a wireless charging board, a wireless charging board misalignment detection method, and a wireless charging system.

### BACKGROUND

As a quantity of electric vehicles increases and a market expands, wireless charging of an electric vehicle power battery, as an innovative technical direction, is expected to become a mainstream electric vehicle charging manner in the future because of its excellent features such as high charging convenience, no need of manual intervention, no need of manual attendance, low maintenance costs, a small footprint, no electric leakage risk, and dynamic charging during vehicle driving.

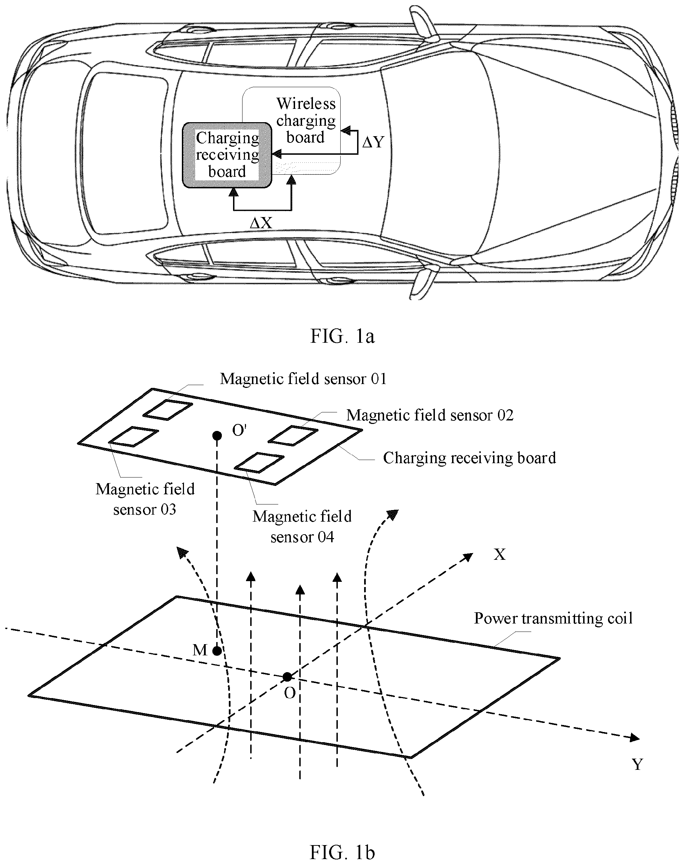

In a wireless charging process, it needs to be ensured that a charging receiving board in an electric vehicle is located right above a wireless charging board. As shown in FIG. 1a, a maximum offset ΔX in an X direction and a maximum offset ΔY in a Y direction between the charging receiving board and the wireless charging board need to meet a regulatory requirement. For example, ΔX needs to meet at least ± 7.5 cm, and ΔY needs to meet at least ± 10 cm, so that the wireless charging board can charge a vehicle power battery by using the charging receiving board. Therefore, in a vehicle parking process, a wireless charging board misalignment detection result needs to be provided to a driver, to guide the driver to adjust a position of the vehicle, thereby ensuring that the charging receiving board can be correctly located above the wireless charging board.

Currently, a wireless charging board misalignment detection method is mainly as follows: When a power transmitting coil in the wireless charging board works, as shown in FIG. 1b, four magnetic field sensors (a magnetic field sensor 01, a magnetic field sensor 02, a magnetic field sensor 03, and a magnetic field sensor 04) inside the charging receiving board induct a magnetic field emitted by the power transmitting coil, and generate induced voltage values. Then, the charging receiving board determines, based on the induced voltage values generated by the four magnetic field sensors and a preset mapping relationship between an induced voltage value and a relative position, a relative position of the wireless charging board to the charging receiving board, that is, coordinates of a projection point M of a central point O' of the charging receiving board on a coordinate plane on which a central point O of the power transmitting coil (that is, a central point of the wireless charging board) is located. However, the foregoing manner can work only when the charging receiving board is above the wireless charging board, which has a relatively small working range (for example, only about ± 20 cm), and leaves a relatively small adjustment space for the driver. Once the vehicle is parked beyond the range, the vehicle needs to be driven away from a charging parking space and parked again, resulting in poor applicability.

### SUMMARY

This application provides a wireless charging board, a wireless charging board misalignment detection method, and a wireless charging system, so that real-time charging position misalignment information of the wireless charging board can be determined when a frontmost end or a rearmost end of a target vehicle arrives above the wireless charging board, thereby expanding an adjustment range during alignment between a target charging working region and the wireless charging board, ensuring that a sufficient adjustment space is left for a driver, and achieving high applicability.

According to a first aspect, this application provides a wireless charging board. The wireless charging board includes a power transmitting coil, a detection circuit, a plurality of metal induction coils, and a processor. The power transmitting coil is disposed on a first plane in the wireless charging board, and is configured to generate an alternating magnetic field. The metal induction coil is disposed on a second plane in the wireless charging board. The second plane is parallel to the first plane. The processor controls each metal induction coil located on the second plane to start to work, and sends a detection instruction to the detection circuit. Then, each metal induction coil starts to detect, through induction, whether a metal exists right above the metal induction coil, and generates an induced electrical signal. According to the received detection instruction, the detection circuit starts to obtain the induced electrical signal generated by each metal induction coil, and sends the induced electrical signal generated by each metal induction coil to the processor. The processor determines a first detection matrix based on the induced electrical signal generated by each metal induction coil, where each matrix element in the first detection matrix is in a one-to-one correspondence with each metal induction coil; and determines a relative position of the wireless charging board to a chassis of a target vehicle in a chassis metal detection matrix of the target vehicle based on the first detection matrix, and determines charging position misalignment information of the wireless charging board based on the relative position of the wireless charging board to the chassis of the target vehicle. Because the vehicle chassis is a metal with a large size, when a frontmost end or a rearmost end of the target vehicle arrives above the wireless charging board, the wireless charging board may determine real-time charging position misalignment information of the wireless charging board, thereby expanding an adjustment range during alignment between a target charging working region (for example, a charging receiving board of the target vehicle) and the wireless charging board, ensuring that a sufficient adjustment space is left for a driver, and achieving high applicability.

With reference to the first aspect, in a first possible implementation, when the induced electrical signal generated by the metal induction coil is greater than a first preset threshold, the processor determines a matrix element corresponding to the metal induction coil in the first detection matrix to be a first value.

With reference to the first aspect, in a second possible implementation, the chassis metal detection matrix of the target vehicle is obtained by a metal detection device by detecting the chassis of the target vehicle, the metal detection device includes a plurality of metal induction coils, the plurality of metal induction coils in the metal detection device are disposed on a third plane in the metal detection device, the plurality of metal induction coils in the metal detection device are orthogonally distributed on the third plane, the plurality of metal induction coils in the wireless charging board are orthogonally distributed on the second plane, and a distance between adjacent metal induction coils on the third plane is the same as a distance between adjacent metal induction coils on the second plane. An arrangement rule of the plurality of metal induction coils in the wireless charging board on the second plane is the same as an arrangement rule of the plurality of metal induction coils in the metal detection device on the second plane, so that a case in which the first detection matrix detected by the wireless charging board cannot match the vehicle chassis metal detection matrix detected by the metal detection device due to inconsistent arrangement rules can be avoided, thereby improving accuracy of the charging position misalignment information of the wireless charging board.

With reference to the first aspect, in a third possible implementation, the processor determines, from the chassis metal detection matrix of the target vehicle, a first submatrix whose matching degree with the first detection matrix is greater than a second preset threshold, and determines a position of the first submatrix in the chassis metal detection matrix of the target vehicle as the relative position of the wireless charging board to the chassis of the target vehicle. The wireless charging board may be mapped to the chassis of the target vehicle by using the first submatrix in the chassis metal detection matrix of the target vehicle, so that a real-time position of the wireless charging board in the chassis of the target vehicle can be obtained, thereby expanding an adjustment space left for a driver, and achieving high applicability.

With reference to the first aspect, in a fourth possible implementation, the processor determines the charging position misalignment information of the wireless charging board based on a target charging working region in the chassis metal detection matrix of the target vehicle and the relative position of the wireless charging board to the chassis of the target vehicle. The target charging working region herein may be a first region that is in the chassis metal detection matrix of the target vehicle and that corresponds to a charging receiving board of the target vehicle, or may be a region that is in the chassis metal detection matrix of the target vehicle and that includes the first region and is greater than the first region, which achieves high flexibility.

With reference to the first aspect, in a fifth possible implementation, the target charging working region is determined based on a second submatrix in the chassis metal detection matrix of the target vehicle, and a proportion of matrix elements that are the first value in matrix elements of the second submatrix is greater than a third preset threshold.

With reference to the first aspect, in a sixth possible implementation, the charging position misalignment information includes a charging misalignment direction and/or a charging misalignment distance.

With reference to the first aspect, in a seventh possible implementation, when the charging misalignment distance included in the charging position misalignment information is less than a preset charging misalignment distance threshold, it indicates that the wireless charging board is aligned with the target charging working region, and in this case, the processor controls the plurality of metal induction coils to stop working, so that unnecessary power consumption of the wireless charging board in a wireless charging process can be reduced, and charging efficiency can be improved.

With reference to the first aspect, in an eighth possible implementation, when the charging misalignment distance included in the charging position misalignment information is less than a preset charging misalignment distance threshold, the processor controls the power transmitting coil to generate an alternating magnetic field, so that a case in which the wireless charging board still supplies power to the power transmitting coil when the wireless charging board is not aligned with the target charging working region can be avoided, thereby reducing unnecessary power consumption of the wireless charging board in a wireless charging process, and improving charging efficiency.

With reference to the first aspect, in a ninth possible implementation, the processor obtains first vehicle information of the target vehicle, and determines, from a vehicle chassis matrix detection matrix set, a chassis metal detection matrix corresponding to the first vehicle information. The vehicle chassis detection matrix set includes a plurality of chassis metal detection matrices and vehicle information corresponding to each chassis metal detection matrix. Based on vehicle models of different to-be-charged vehicles, chassis metal detection matrices that match the vehicle models may be determined, so that accuracy of charging position misalignment information of the wireless charging board is improved, and applicability is high.

With reference to the first aspect, in a tenth possible implementation, the wireless charging board further includes a plurality of metal foreign matter detection coils, each metal foreign matter detection coil is disposed on a fourth plane in the wireless charging board, and the fourth plane is parallel to the first plane. The wireless charging board may further implement a metal foreign matter detection function by using each metal foreign matter detection coil, which has various functions and high applicability.

With reference to the first aspect, in an eleventh possible implementation, when the charging misalignment distance included in the charging position misalignment information is less than the preset charging misalignment distance threshold, the processor controls the plurality of metal foreign matter detection coils to start to work. After the wireless charging board is aligned with the target charging working region, the wireless charging board starts to supply power to the metal foreign matter detection coils, so that a case in which the wireless charging board still supplies power to the metal foreign matter detection coils when the wireless charging board is not aligned with the target charging working region can be avoided, thereby reducing unnecessary power consumption of the wireless charging board in a wireless charging process, and improving charging efficiency.

With reference to the first aspect, in a twelfth possible implementation, when determining, based on detected signals of the plurality of metal foreign matter detection coils, that no metal foreign matter exists between the wireless charging board and the chassis of the target vehicle, the processor controls the power transmitting coil to start to generate an alternating magnetic field. A metal foreign matter is detected before charging, so that a case in which the metal foreign matter exists in a region between the wireless charging board and the charging receiving board in a charging process, and the metal foreign matter is heated or even smokes and fires can be avoided, thereby improving safety in the wireless charging process.

According to a second aspect, this application provides a wireless charging board misalignment detection method. The method includes: Induced electrical signals generated by a plurality of metal induction coils in a wireless charging board are obtained. Each metal induction coil is disposed on a second plane in the wireless charging board, the second plane is parallel to a first plane on which a power transmitting coil in the wireless charging board is located, and the metal induction coil is configured to detect, through induction, whether a metal exists right above the first metal induction coil and generate an induced electrical signal. Then, a first detection matrix is determined based on an induced electrical signal generated by each metal induction coil. Each matrix element in the first detection matrix is in a one-to-one correspondence with each metal induction coil. In addition, a relative position of the wireless charging board to a chassis of a target vehicle is determined in a chassis metal detection matrix of the target vehicle based on the first detection matrix, and charging position misalignment information of the wireless charging board is determined based on the relative position of the wireless charging board to the chassis of the target vehicle.

With reference to the second aspect, in a first possible implementation, when the induced electrical signal generated by the metal induction coil is greater than a first preset threshold, a processor determines a matrix element corresponding to the metal induction coil in the first detection matrix to be a first value.

With reference to the second aspect, in a second possible implementation, the chassis metal detection matrix of the target vehicle is obtained by a metal detection device by detecting the chassis of the target vehicle, the metal detection device includes a plurality of metal induction coils, the plurality of metal induction coils in the metal detection device are disposed on a third plane in the metal detection device, the plurality of metal induction coils in the metal detection device are orthogonally distributed on the third plane, the plurality of metal induction coils in the wireless charging board are orthogonally distributed on the second plane, and a distance between adjacent metal induction coils on the third plane is the same as a distance between adjacent metal induction coils on the second plane.

With reference to the second aspect, in a third possible implementation, the processor determines, from the chassis metal detection matrix of the target vehicle, a first submatrix whose matching degree with the first detection matrix is greater than a second preset threshold, and determines a position of the first submatrix in the chassis metal detection matrix of the target vehicle as the relative position of the wireless charging board to the chassis of the target vehicle.

With reference to the second aspect, in a fourth possible implementation, the processor determines the charging position misalignment information of the wireless charging board based on a target charging working region in the chassis metal detection matrix of the target vehicle and the relative position of the wireless charging board to the chassis of the target vehicle.

With reference to the second aspect, in a fifth possible implementation, the target charging working region is determined based on a second submatrix in the chassis metal detection matrix of the target vehicle, and a proportion of matrix elements that are the first value in matrix elements of the second submatrix is greater than a third preset threshold.

With reference to the second aspect, in a sixth possible implementation, the charging position misalignment information includes a charging misalignment direction and/or a charging misalignment distance.

With reference to the second aspect, in a seventh possible implementation, when the charging misalignment distance included in the charging position misalignment information is less than a preset charging misalignment distance threshold, it indicates that the wireless charging board is aligned with the target charging working region, and in this case, the processor controls the plurality of metal induction coils to stop working.

With reference to the second aspect, in an eighth possible implementation, when the charging misalignment distance included in the charging position misalignment information is less than a preset charging misalignment distance threshold, the processor controls the power transmitting coil to generate an alternating magnetic field.

With reference to the second aspect, in a ninth possible implementation, the processor obtains first vehicle information of the target vehicle, and determines, from a vehicle chassis matrix detection matrix set, a chassis metal detection matrix corresponding to the first vehicle information. The vehicle chassis detection matrix set includes a plurality of chassis metal detection matrices and vehicle information corresponding to each chassis metal detection matrix.

With reference to the second aspect, in a tenth possible implementation, the wireless charging board further includes a plurality of metal foreign matter detection coils, each metal foreign matter detection coil is disposed on a fourth plane in the wireless charging board, and the fourth plane is parallel to the first plane.

With reference to the second aspect, in an eleventh possible implementation, when the charging misalignment distance included in the charging position misalignment information is less than the preset charging misalignment distance threshold, the processor controls the plurality of metal foreign matter detection coils to start to work.

With reference to the second aspect, in a twelfth possible implementation, when determining, based on detected signals of the plurality of metal foreign matter detection coils, that no metal foreign matter exists between the wireless charging board and the chassis of the target vehicle, the processor controls the power transmitting coil to start to generate an alternating magnetic field.

According to a third aspect, this application provides a wireless charging system. The wireless charging system includes a charging receiving board and the wireless charging board provided in any one of the first aspect and the possible implementations of the first aspect. The charging receiving board includes a power receiving coil, and the power receiving coil is configured to transfer energy to each other with the power transmitting coil through electromagnetic mutual induction.

It should be understood that implementations and beneficial effects of the foregoing aspects of this application may be referred to each other.

### BRIEF DESCRIPTION OF DRAWINGS

FIG. 1a is a schematic diagram of positions between a wireless charging board and a charging receiving board according to a conventional technology;
FIG. 1b is a schematic diagram of working of magnetic field sensors located in a charging receiving board according to the conventional technology;
FIG. 2 is a schematic diagram of a structure of a wireless charging system according to this application;
FIG. 3 is a schematic diagram of another structure of a wireless charging system according to this application;
FIG. 4 is a schematic diagram of a structure of a wireless charging board according to this application;
FIG. 5 is a schematic diagram of plane distribution of a plurality of metal induction coils in a wireless charging board and a plurality of metal induction coils in a metal detection device according to this application;
FIG. 6 is a schematic diagram of position distribution when a wireless charging board detects a vehicle chassis according to this application;
FIG. 7 is a schematic diagram of a first detection matrix according to this application;
FIG. 8 is a schematic diagram of a process of determining, from a chassis metal detection matrix of a target vehicle, a first submatrix that matches a first detection matrix according to this application;
FIG. 9 is a schematic diagram of a target charging working region and a wireless charging board in a chassis metal detection matrix of a target vehicle according to this application;
FIG. 10 is a schematic diagram of another structure of a wireless charging board according to this application; and
FIG. 11 is a schematic flowchart of a wireless charging board misalignment detection method according to this application.

### DESCRIPTION OF EMBODIMENTS

A wireless charging board and a wireless charging system that are provided in this application may be adapted to wireless charging scenarios of different to-be-charged devices. The to-be-charged device may be an electricity-driven device such as an electric vehicle or an electric robot. This is not limited in this application. The following uses an example in which the to-be-charged device is an electric vehicle for description.

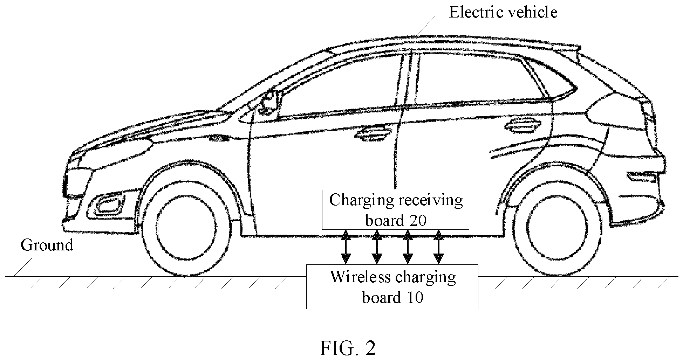

FIG. 2 is a schematic diagram of a structure of a wireless charging system according to this application. As shown in FIG. 2, the wireless charging system may include a wireless charging board 10 and a charging receiving board 20. The wireless charging board 10 may be disposed in a region such as a wireless charging station, a wireless charging parking space, or a wireless charging road, and the wireless charging board 10 is disposed on ground. Optionally, the wireless charging board 10 may alternatively be buried under the ground. The charging receiving board 20 is integrated at a bottom of the electric vehicle. In addition, the wireless charging board 10 may be connected to a power supply, and the charging receiving board 20 may be connected to a power battery of the electric vehicle. When the electric vehicle enters a wireless charging range of the wireless charging board 10, the power supply may charge the power battery of the electric vehicle by using the wireless charging board 10 and the charging receiving board 20. Specifically, the wireless charging board 10 and the charging receiving board 20 may transfer power to each other in an electromagnetic induction manner. In addition, the power supply and the power battery of the electric vehicle may further implement bidirectional charging by using the wireless charging board 10 and the charging receiving board 20. That is, the power battery of the electric vehicle may further discharge electricity to the power supply by using the wireless charging board 10 and the charging receiving board 20.

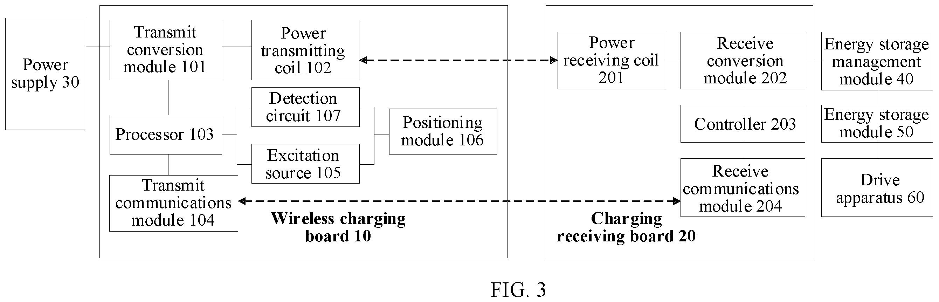

FIG. 3 is a schematic diagram of another structure of a wireless charging system according to this application. As shown in FIG. 3, the wireless charging board 10 may include a transmit conversion module 101, a power transmitting coil 102, a processor 103, a transmit communications module 104, an excitation source 105, a positioning module 106, and a detection circuit 107.

The transmit conversion module 101 is connected to a power supply 30 and the power transmitting coil 102, and converts an alternating current or a direct current obtained from the power supply 30 into a high-frequency alternating current. When an input from the power supply 30 is an alternating current, the transmit conversion module 101 includes at least a power factor correction unit and an inverter. When an input from the power supply 30 is a direct current, the transmit conversion module 101 includes at least an inverter. The power factor correction unit is configured to make an input current phase of the wireless charging system consistent with a voltage phase of a power grid, reduce a harmonic content of the wireless charging system, and increase a power factor value, to reduce pollution of the wireless charging system to the power grid and improve reliability. The power factor correction unit may be further configured to increase or decrease an output voltage of the power factor correction unit based on a next-stage requirement. The inverter may convert a voltage output by the power factor correction unit into a high-frequency alternating current voltage, and apply the high-frequency alternating current voltage to the power transmitting coil 102. The high-frequency alternating current voltage can greatly improve transmitting efficiency and an energy transmission distance of the power transmitting coil 102.

After establishing communication with the charging receiving board 20 by using the transmit communications module 104, the processor 103 may control the excitation source 105 (a voltage source or a current source) to provide electric energy for a plurality of metal induction coils in the positioning module 106. Then, the detection circuit 107 connected to each metal induction coil obtains an induced electrical signal (for example, an induced voltage or an induced current) generated by each metal induction coil, and determines a first detection matrix based on the induced electrical signal generated by each metal induction coil. Each matrix element in the first detection matrix is in a one-to-one correspondence with each metal induction coil. Further, the processor 103 determines a relative position of the wireless charging board 10 to a chassis of a target vehicle in a chassis metal detection matrix of the target vehicle based on the first detection matrix, and determines charging position misalignment information of the wireless charging board 10 based on the relative position of the wireless charging board 10 to the chassis of the target vehicle. Then, when determining, based on the charging position misalignment information, that the charging receiving board 20 is located within a charging range of the wireless charging board 10, the processor 103 controls the transmit conversion module 101 connected to the processor 103 to output an output 85 kHz high-frequency alternating current to the power transmitting coil 102.

Optionally, the wireless charging board 10 may further include a metal foreign matter detection module (not shown in the figure). The metal foreign matter detection module includes a plurality of metal foreign matter detection coils. Each metal foreign matter detection coil is configured to detect, through induction, whether a metal foreign matter exists between the wireless charging board 10 and the charging receiving board 20, and generate a detected signal. The processor 103 is further configured to: when determining that the charging receiving board 20 is located within the charging range of the wireless charging board 10, control each metal foreign matter detection coil to start to work, and when determining, by using the detected signal of each metal foreign matter detection coil, that no metal foreign matter exists between the wireless charging board 10 and the charging receiving board 20, control the transmit conversion module 101 connected to the processor 103 to output an output 85 kHz high-frequency alternating current to the power transmitting coil 102.

Herein, for specific positions of each metal induction coil and each metal foreign matter detection coil in the wireless charging board 10, and specific implementations of the processor 103 in determining the charging position misalignment information of the wireless charging board 10, determining whether a metal foreign matter exists between the wireless charging board 10 and the charging receiving board 20, and the like, refer to subsequent descriptions. Details are not described herein.

The power transmitting coil 102 is configured to transmit, in an alternating magnetic field form, the 85 kHz high-frequency alternating current output by the transmit conversion module 101.

The processor 103 may further control adjustment of voltage, current, and frequency conversion parameters of the transmit conversion module 101 based on a transmit power requirement of actual wireless charging, to control voltage and current output adjustment of the high-frequency alternating current in the power transmitting coil 102.

The transmit communications module 104 is configured to perform wireless communication with the charging receiving board 20, and communicated content may include power control information, fault protection information, power-on/off information, mutual authentication information, and the like. For example, the transmit communications module 104 may receive information sent by the charging receiving board 20, such as attribute information of a to-be-charged device (for example, vehicle information of a to-be-charged vehicle), a charging request, and mutual authentication information. The transmit communications module 104 may further send wireless charging transmitting control information, mutual authentication information, and historical wireless charging data information to the charging receiving board 20.

A manner of wireless communication between the transmit communications module 104 and the charging receiving board 20 may include any one or a combination of some of Bluetooth (Bluetooth), wireless-fidelity (wireless-fidelity, Wi-Fi), ZigBee (ZigBee), radio frequency identification (radio frequency identification, RFID), long range (long range, Lora) wireless, and near field communication (near field communication, NFC). Optionally, the transmit communications module 104 may further communicate with an intelligent terminal of a user to which the to-be-charged device belongs, and the user to which the to-be-charged device belongs may implement remote authentication and user information transmission by using the communications function.

Still refer to FIG. 3. The charging receiving board 20 includes a power receiving coil 201, a receive conversion module 202, a controller 203, and a receive communications module 204.

The power receiving coil 201 is configured to receive active power and reactive power transmitted by the wireless charging board 10. A coupling manner of the power transmitting coil 102 and the power receiving coil 201 in the wireless charging system may be any selective combination. For example, the coupling manner of the two may include: S-S coupling, P-P coupling, S-P coupling, P-S coupling, LCL-LCL coupling, or LCL-P coupling. S refers to serial connection (series), P refers to parallel connection (parallel), L refers to an inductor, and C refers to a capacitor. The S-S coupling means that a resonant circuit in the wireless charging board 10 is series resonance, and a resonant circuit in the charging receiving board 20 is series resonance. The S-P coupling means that a resonant circuit in the wireless charging board 10 is series resonance, and a resonant circuit in the charging receiving board 20 is parallel resonance. The LCL-LCL type means that resonant circuits in both the wireless charging board 10 and the charging receiving board 20 are LCL resonant circuits (that is, resonant circuits including two inductors L and one capacitor C).

In addition, to implement a bidirectional charging function of the wireless charging system, both the wireless charging board 10 and the charging receiving board 20 may include both a power receiving coil and a power transmitting coil. The power receiving coil and the power transmitting coil in the wireless charging board 10 and the charging receiving board 20 may be independently disposed, or may be disposed in an integrated manner.

The receive conversion module 202 may be connected to an energy storage module 50 by using an energy storage management module 40, and is configured to convert a high-frequency alternating current (or voltage) that has the same frequency and that is received by the power receiving coil 201 into a direct current (or a direct current voltage) required for charging the energy storage module 50. The receive conversion module 202 may include a rectifier circuit and a direct current conversion unit. The rectifier circuit may convert the high-frequency alternating current (or a voltage) received by the power receiving coil 201 into a direct current (or a direct current voltage). The direct current conversion unit may provide the direct current (or the direct current voltage) for a next-stage charging circuit, to implement charging in a constant mode. The rectifier circuit may be integrated with the power receiving coil 201, or may be disposed independently.

It should be noted that the energy storage management module 40 and the energy storage module 50 may be located outside the charging receiving board 20, for example, may be integrated into a power supply of the to-be-charged device. Alternatively, the energy storage management module 40 and the energy storage module 50 may be located inside the charging receiving board 20. The energy storage module 50 may be further connected to a drive apparatus 60, and is configured to supply power to the drive apparatus 60, to drive the to-be-charged device.

The controller 203 is configured to control parameters such as a voltage, a current, and a frequency of the receive conversion module 202 based on a receive power requirement of actual wireless charging.

The receive communications module 204 is configured to communicate with the transmit communications module 104 in the wireless charging board 10, whose function corresponds to a function of the transmit communications module 104, and details are not described herein.

It may be understood that, when a frontmost end or a rearmost end of the vehicle arrives above the wireless charging board 10, the wireless charging board 10 provided in this application may determine real-time charging position misalignment information between the wireless charging board 10 and a target charging working region, so that a working range of an auxiliary position alignment function (that is, a function of aligning the wireless charging board with the target charging working region) in the wireless charging system can be expanded, flexibility is high, and applicability is high.

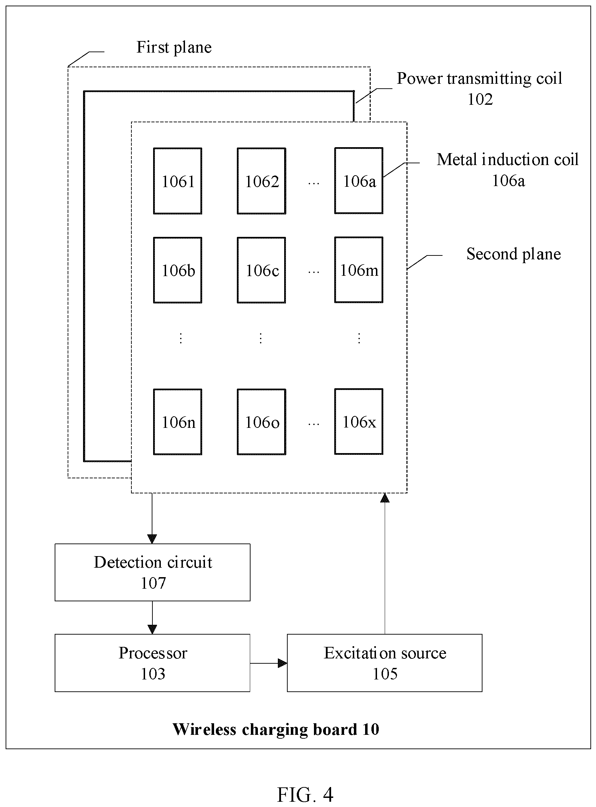

With reference to FIG. 4 to FIG. 10, the following describes an example of a working principle of the wireless charging board provided in this application.

FIG. 4 is a schematic diagram of a structure of a wireless charging board according to this application. As shown in FIG. 4, the wireless charging board 10 includes a power transmitting coil 102, a metal induction coil 1061, a metal induction coil 1062, ..., a metal induction coil 106x, a detection circuit 107, a processor 103, and an excitation source 105. The power transmitting coil 102 is disposed on a first plane in the wireless charging board 10, the metal induction coil 1061, the metal induction coil 1062, ..., and the metal induction coil 106x are all disposed on a second plane in the wireless charging board 10, the second plane is parallel to the first plane, and both the first plane and the second plane are parallel to a plane on which a bottom of the wireless charging board 10 is located. The excitation source 105 is connected to each metal induction coil on the second plane, and is configured to provide electric energy for each metal induction coil. When being provided with electric energy, each metal induction coil detects, through induction, whether a metal exists right above the metal induction coil, and generates an induced electrical signal. The detection circuit 107 is connected to each metal induction coil on the second plane, and is configured to: detect the induced electrical signal generated by each metal induction coil, and send the detected induced electrical signal generated by each metal induction coil to the processor 103.

The processor 103 is connected to the detection circuit 107, and determines a first detection matrix based on the received induced electrical signal generated by each metal induction coil, where each matrix element in the first detection matrix is in a one-to-one correspondence with each metal induction coil; and determines a relative position of the wireless charging board 10 to a chassis of a target vehicle in a chassis metal detection matrix of the target vehicle based on the first detection matrix, and determines charging position misalignment information of the wireless charging board 10 based on the relative position of the wireless charging board 10 to the chassis of the target vehicle.

In an optional embodiment, when the target vehicle enters a vicinity of a wireless charging parking space (for example, within a range of 5 meters to 10 meters away from the wireless charging board 10), after establishing wireless communication with the processor 103 in the wireless charging board 10 by using the receive communications module 204 in the charging receiving board 20 and the transmit communications module 104, the target vehicle sends first vehicle information of the target vehicle to the processor 103 by using the receive communications module 204 and the transmit communications module 104. The first vehicle information is a vehicle model. The processor 103 receives the first vehicle information of the target vehicle, and determines, from a vehicle chassis detection matrix set, a chassis metal detection matrix corresponding to the first vehicle information, that is, a chassis metal detection matrix of the target vehicle.

The vehicle chassis matrix set includes a plurality of chassis metal detection matrices and vehicle information corresponding to each chassis metal detection matrix. Chassis metal detection matrices corresponding to different vehicle models in the vehicle chassis matrix set may be obtained by a metal detection device by detecting vehicle chassis of the different vehicle models in advance. The metal detection device includes a plurality of metal induction coils, the plurality of metal induction coils in the metal detection device are disposed on a third plane in the metal detection device, and the third plane is parallel to a plane on which a bottom of the metal detection device is located. The plurality of metal induction coils in the metal detection device are orthogonally distributed on the third plane, the plurality of metal induction coils in the wireless charging board 10 are orthogonally distributed on the second plane, and a distance between adjacent metal induction coils on the third plane is the same as a distance between adjacent metal induction coils on the second plane.

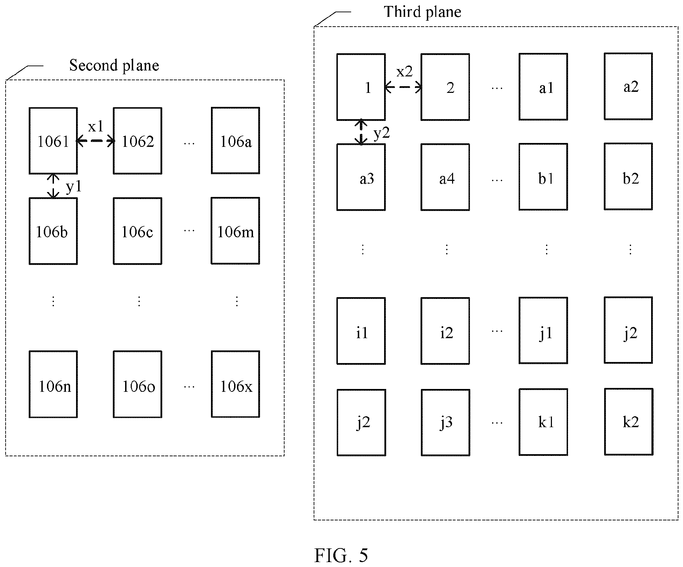

For ease of understanding, refer to FIG. 5. FIG. 5 is a schematic diagram of plane distribution of a plurality of metal induction coils in a wireless charging board and a plurality of metal induction coils in a metal detection device according to this application. As shown in FIG. 5, on the second plane, the metal induction coils 1061, 1062, ..., and 106a are distributed in a first direction in a manner in which distances between adjacent metal induction coils (for example, 1061 and 1062) are all x1, the metal induction coils 106b, 106c, ..., and 106m are distributed in the first direction in a manner in which distances between adjacent metal induction coils (for example, 106b and 106c) are all x1, ..., and the metal induction coils 106n, 106o, ..., and 106x are distributed in the first direction in a manner in which distances between adjacent metal induction coils (for example, 106n and 106o) are all x1. In addition, the metal induction coils 1061, 106b, ..., and 106n are distributed in a second direction in a manner in which distances between adjacent metal induction coils (for example, 1061 and 106b) are all y1, the metal induction coils 1062, 106c, ..., and 106o are distributed in the second direction in a manner in which distances between adjacent metal induction coils (for example, 1062 and 106c) are all y1, ..., and the metal induction coils 106a, 106m, ..., and 106x are distributed in the second direction in a manner in which distances between adjacent metal induction coils (for example, 106a and 106m) are all y1. The first direction is perpendicular to the second direction.

On the third plane, metal induction coils 1, 2, ..., a1, and a2 are distributed in a third direction in a manner in which distances between adjacent metal induction coils (for example, 1 and 2) are all x2, metal induction coils a3, a4, ..., b1, and b2 are distributed in the third direction in a manner in which distances between adjacent metal induction coils (for example, a3 and a4) are all x2, ..., and metal induction coils j2, j3, ..., k1, and k2 are distributed in the third direction in a manner in which distances between adjacent metal induction coils (for example, j2 and j3) are all x2. In addition, the metal induction coils 1, a3, ..., i1, and j2 are distributed in a fourth direction in a manner in which distances between adjacent metal induction coils (for example, 1 and a3) are all y2, the metal induction coils 2, a4, ..., i2, and j3 are distributed in the fourth direction in a manner in which distances between adjacent metal induction coils (for example, 2 and a4) are all y2, ..., and the metal induction coils a2, b2, ..., j2, and k2 are distributed in the fourth direction in a manner in which distances between adjacent metal induction coils (for example, a2 and b2) are all y2. The third direction is perpendicular to the fourth direction.

x1=x2, and y1=y2. The first direction and the third direction may be the same or different. The second direction and the fourth direction may be the same or different. This is not limited in this application.

It should be noted that parameters of each metal induction coil in the metal detection device are consistent with parameters of each metal induction coil in the wireless charging board, and the parameters include a shape, a size, an induced electrical signal threshold for determining that a metal exists right above the metal induction coil, and the like of the metal induction coil. The metal detection device may be the wireless charging board or another device that can be used to detect a metal of a vehicle chassis. A total quantity of metal induction coils in the device may be the same as or different from a total quantity of metal induction coils in the wireless charging board. That is, the chassis metal detection matrix of the vehicle may be obtained by detecting the vehicle chassis once by a metal detection device whose detection area covered by all metal induction coils is greater than or equal to an entire area occupied by the vehicle chassis, or may be obtained by detecting the vehicle chassis a plurality of times by a metal detection device whose detection area covered by all metal induction coils is less than the entire area occupied by the vehicle chassis. This is not limited in this application.

It may be understood that, an arrangement rule of the plurality of metal induction coils in the wireless charging board 10 on the second plane is the same as an arrangement rule of the plurality of metal induction coils in the metal detection device on the second plane, so that a case in which the first detection matrix detected by the wireless charging board 10 cannot match the vehicle chassis metal detection matrix detected by the metal detection device due to inconsistent arrangement rules can be avoided, thereby improving accuracy of the charging position misalignment information of the wireless charging board 10.

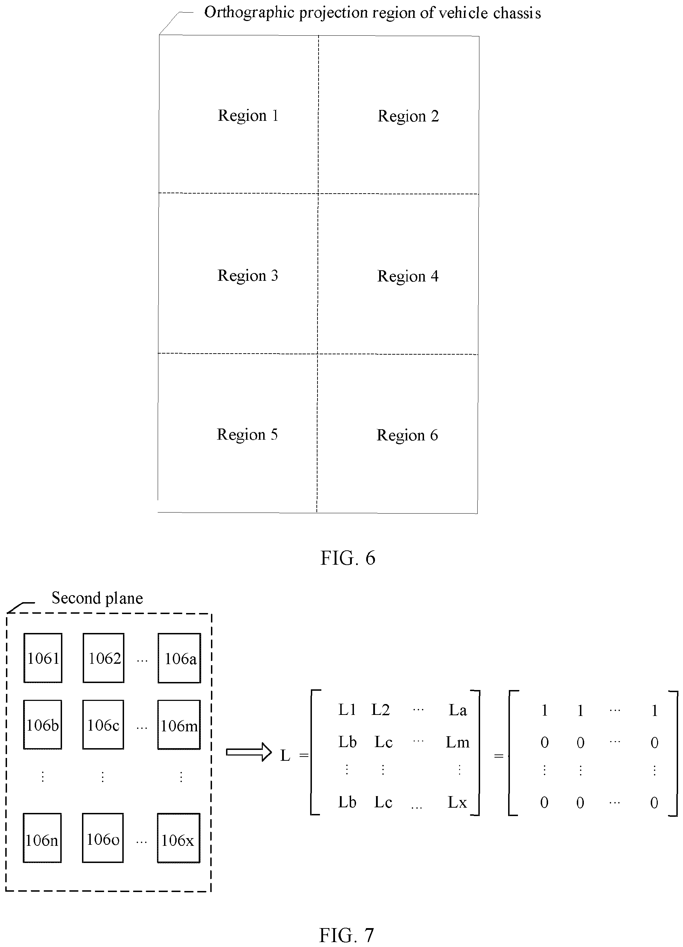

For example, the following uses an example in which the metal detection device is the wireless charging board 10 to describe how to perform metal detection on the chassis of the target vehicle to obtain the chassis metal detection matrix of the target vehicle. FIG. 6 is a schematic diagram of position distribution when a wireless charging board detects a vehicle chassis according to this application. As shown in FIG. 6, when the target vehicle is in a parked state, a region (corresponding to a rectangular region in FIG. 6) formed by vertical projection of the chassis of the target vehicle on ground, that is, an orthographic projection region of the vehicle chassis, is determined, and then based on a region size of the wireless charging board 10, the orthographic projection region of the vehicle chassis is divided into six regions: a region 1 to a region 6. First, the wireless charging board 10 is placed in the region 1. The processor 103 in the wireless charging board 10 detects, through induction by using the metal induction coils inside the wireless charging board 10, whether a metal exists right above each metal induction coil, obtains, by using the detection circuit 107, an induced electrical signal generated by each metal induction coil, and determines, based on the induced electrical signal generated by each metal induction coil, a detection matrix corresponding to the region 1. Then, the wireless charging board 10 is sequentially placed in the region 2, the region 3, the region 4, the region 5, and the region 6. Similarly, the processor 103 in the wireless charging board 10 sequentially obtains a detection matrix corresponding to each of the region 2 to the region 6. The processor 103 splices, based on a layout of the six regions in the orthographic projection region of the vehicle chassis, detection matrices corresponding to the six regions, to obtain the chassis metal detection matrix of the target vehicle. Herein, for a process in which the processor 103 determines the detection matrix based on the induced electrical signal generated by each metal induction coil, refer to a subsequent process in which the processor 103 determines the first detection matrix. Details are not described herein.

After determining, from the vehicle chassis detection matrix set based on the vehicle model of the target vehicle, the chassis metal detection matrix corresponding to the vehicle model of the target vehicle, the processor 103 controls the excitation source 105 to supply power to each metal induction coil, and sends a detection instruction to the detection circuit 107 connected to each metal induction coil. Each metal induction coil starts to detect whether a metal exists right above the metal induction coil, and generates an induced electrical signal. At the same time, the detection circuit 107 starts to obtain, according to the received detection instruction, the induced electrical signal generated by each metal induction coil, and sends the induced electrical signal generated by each metal induction coil to the processor 103.

The processor 103 receives the induced electrical signal of each metal induction coil, and determines the first detection matrix in a manner of determining, when the induced electrical signal of the metal induction coil is greater than a first preset threshold, a matrix element corresponding to the metal induction coil in the first detection matrix to be a first value (for example, 1). For ease of understanding, refer to FIG. 7. FIG. 7 is a schematic diagram of a first detection matrix according to this application. As shown in FIG. 7, when an induced electrical signal of the metal induction coil 1061 is greater than the first preset threshold, the processor 10 determines a matrix element L1 corresponding to the metal induction coil 1061 in the first detection matrix L to be 1; ...; when an induced electrical signal of 106b is less than or equal to the first preset threshold, the processor 10 determines a matrix element Lb corresponding to the metal induction coil 106b in the first detection matrix to be 0; ..., and when an induced electrical signal of the metal induction coil 106x is less than or equal to the first preset threshold, the processor 10 determines a matrix element Lx corresponding to the metal induction coil 106x in the first detection matrix to be 0. The processor 10 may obtain, in the foregoing manner, the first detection matrix L shown in FIG. 7.

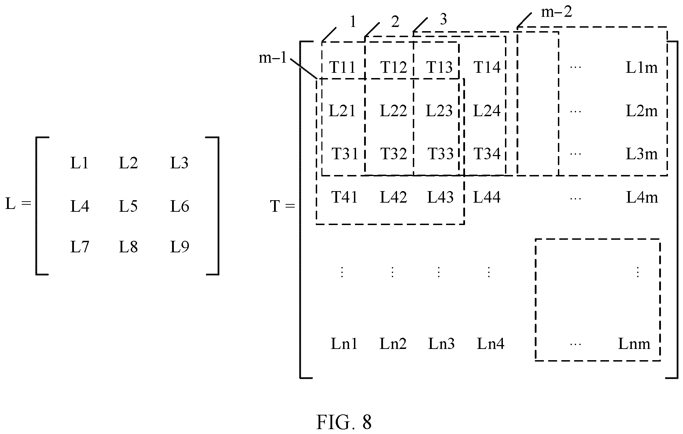

Then, the processor 10 determines, from the chassis metal detection matrix of the target vehicle, a first submatrix that matches the first detection matrix, that is, traverses, in the chassis metal detection matrix of the target vehicle, submatrices that have a same quantity of rows and a same quantity of columns as the first detection matrix, and determines a submatrix whose matching degree with the first detection matrix is greater than a second preset threshold as the first submatrix. For ease of understanding, refer to FIG. 8. FIG. 8 is a schematic diagram of a process of determining, from a chassis metal detection matrix of a target vehicle, a first submatrix that matches a first detection matrix according to this application. As shown in FIG. 8, it is assumed that the first detection matrix L is a matrix with three rows and three columns. After obtaining the first detection matrix L, the processor 10 first calculates a matching degree between the first detection matrix L and a submatrix corresponding to a dashed-line box region 1 in the chassis metal detection matrix T of the target vehicle. A specific process is counting a quantity of matrix elements shared at corresponding positions between the dashed-line box region 1 and the first detection matrix L, and determining a ratio of the quantity of shared matrix elements to a total quantity of matrix elements in the first detection matrix L as a matching degree between the submatrix corresponding to the dashed-line box region 1 and the first detection matrix L. For example, if L1=T11, L2=T12, L3=T13, L4=T21, L5≠T22, L6/T23, L7=T31, L8=T32, and L9/T33, the processor 10 obtains, through calculation, that the matching degree between the submatrix corresponding to the dashed-line box region 1 and the first detection matrix L is 2/3. Then, the processor 10 sequentially calculates, in ascending order of sequence numbers corresponding to dashed-line box regions, matching degrees between the first detection matrix L and submatrices corresponding to the dashed-line box regions. In addition, when there is one submatrix whose matching degree is greater than the second preset threshold in the submatrices corresponding to the plurality of dashed-line box regions, the submatrix whose matching degree is greater than the second preset threshold is determined as the first submatrix, and a position of the first submatrix in the chassis metal detection matrix of the target vehicle is determined as the relative position of the wireless charging board 10 to the chassis of the target vehicle, that is, when the wireless charging board 10 and the chassis of the target vehicle are located on a same plane, the wireless charging board 10 is located at a position in the chassis of the target vehicle. It should be noted that, when there are a plurality of submatrices whose matching degrees are greater than the preset second threshold, the processor 10 determines, as the first submatrix, a submatrix with a highest matching degree in the plurality of submatrices whose matching degrees are greater than the preset second threshold.

Then, the processor 10 determines the charging position misalignment information of the wireless charging board 10 based on a target charging working region in the chassis metal detection matrix of the target vehicle and the relative position of the wireless charging board 10 to the chassis of the target vehicle. The charging position misalignment information of the wireless charging board 10 includes a charging misalignment direction and/or a charging misalignment distance of the wireless charging board 10.

Specifically, the target charging working region may be a relative position of a charging receiving board of the target vehicle to the chassis of the target vehicle. For example, the processor 10 determines a region corresponding to a second submatrix in the chassis metal detection matrix of the target vehicle as the target charging working region. A proportion of matrix elements that are the first value in matrix elements of the second submatrix (that is, a ratio of a quantity of matrix elements that are the first value in matrix elements of the second submatrix to a total quantity of matrix elements in the second submatrix) is greater than a third threshold. It may be understood that the second submatrix is a submatrix that is in the chassis metal detection matrix of the target vehicle and that matches a detection matrix obtained by performing metal detection on the charging receiving board of the target vehicle.

Optionally, the target charging working region may alternatively be determined based on the second submatrix corresponding to the charging receiving board of the target vehicle, a maximum allowed misalignment distance Xmax in the first direction and a maximum allowed misalignment distance Ymax in the second direction between the charging receiving board and the wireless charging board, and a first length value x and a second length value y respectively occupied by an orthographic projection region of the metal induction coils in the first direction and the second direction. For example, if the second submatrix is located in the tenth row to the twelfth row and the fifth column to the eighth column in the chassis metal detection matrix of the target vehicle, the first direction is a horizontal direction, and the second direction is a vertical direction, the processor 10 extends Xmax/x columns leftwards and rightwards respectively and extends Ymax/y columns upwards and downwards respectively by using the second submatrix as a center. Then, a region corresponding to the second submatrix and matrix elements obtained by extending by using the second submatrix in the chassis metal detection matrix of the target vehicle as a center is determined as the target charging working region.

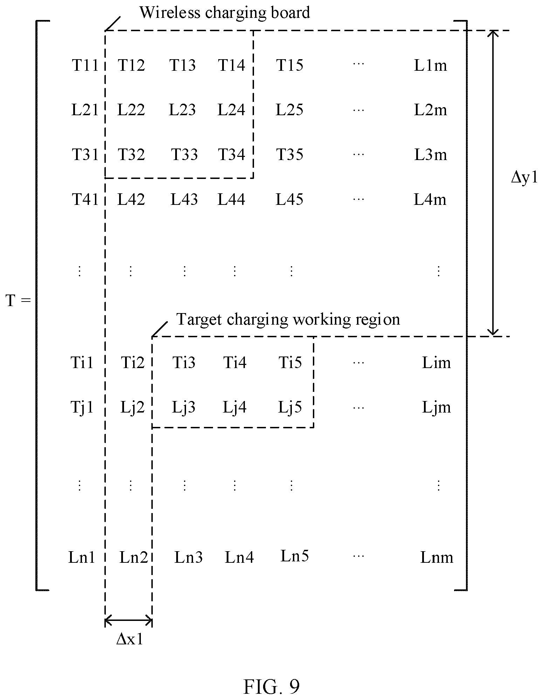

The following uses an example in which the target charging working region is a region corresponding to the second submatrix in the metal detection matrix of the target vehicle to describe the charging position misalignment information of the wireless charging board (that is, position misalignment information between the wireless charging board 10 and the target charging working region). FIG. 9 is a schematic diagram of a target charging working region and a wireless charging board in a chassis metal detection matrix of a target vehicle according to this application. As shown in FIG. 9, a region of the wireless charging board 10 is a region of the first submatrix in the chassis metal detection matrix of the target vehicle, and corresponds to a region corresponding to a square dashed-line box shown in FIG. 9, that is, a region formed by the first row to the third row and the second column to the fourth column in the chassis metal detection matrix T of the target vehicle. The target charging working region is a region corresponding to a rectangular dashed-line box, that is, a region formed by the i^{th} row to the j^{th} row and the third column to the fifth column in the chassis metal detection matrix T of the target vehicle.

The processor 10 obtains, through calculation, that a first difference between a number 2 of a column that is in T and in which the first column in the submatrix corresponding to the wireless charging board region is located and a number 3 of a column that is in T and in which the first column in the submatrix corresponding to the target charging working region is located is -1. The first difference is less than 0. In this case, the processor 10 determines that the charging misalignment direction of the wireless charging board 10 is that the wireless charging board 10 is located on the left of the target charging working region, and determines a product of the first difference and the first length value as a charging misalignment distance Δx1 between the wireless charging board 10 and the target charging working region in the first direction. The first length value is a length value occupied in the first direction by the orthographic projection region of the metal induction coils on the second plane. In addition, if the first difference is greater than 0, it is determined that the charging misalignment direction of the wireless charging board 10 is that the wireless charging board 10 is located on the right of the target charging working region, and a product of the first difference and the first length value is determined as a charging misalignment distance Δx1 between the wireless charging board 10 and the target charging working region in the first direction. If the first difference is 0, it indicates that the wireless charging board 10 overlaps the target charging working region in the first direction.

The processor 10 obtains, through calculation, that a second difference between a number 3 of a row that is in T and in which the last row in the submatrix corresponding to the wireless charging board region is located and a number i of a row that is in T and in which the first row in the submatrix corresponding to the target charging working region is located is 3-i. If the second difference is less than 0, the processor 10 determines that the charging misalignment direction of the wireless charging board 10 is that the wireless charging board 10 is located above the target charging working region, and determines a product of a third difference and the second length value as a charging misalignment distance Δy1 between the wireless charging board 10 and the target charging working region in the second direction. The third difference is a difference between a number of a row that is in T and in which the first row in the submatrix corresponding to the wireless charging board region is located and the number of the row that is in T and in which the first row in the submatrix corresponding to the target charging working region is located. The second length value is a length value occupied in the second direction by the orthographic projection region of the metal induction coils on the second plane. In addition, if the second difference is equal to 0, it is determined that the charging misalignment direction of the wireless charging board 10 is that the wireless charging board 10 is located above the target charging region. If the second difference is greater than 0, a fourth difference between the number of the row that is in T and in which the first row in the submatrix corresponding to the wireless charging board region is located and the number of the row that is in T and in which the first row in the submatrix corresponding to the target charging working region is located is calculated. If the fourth difference is greater than or equal to 0, it is determined that the wireless charging board 10 overlaps with the target charging working region in the second direction. If a fifth difference is greater than or equal to 0, it is determined that the wireless charging board 10 is located below the target charging working region. The fifth difference is a difference between the number of the row that is in T and in which the first row in the submatrix corresponding to the wireless charging board region is located and a number of a row that is in T and in which the last row in the submatrix corresponding to the target charging working region is located.

It should be noted that the charging misalignment direction and the charging misalignment distance of the wireless charging board 10 may alternatively be determined by using numbers of a row and a column in which a matrix element at a central position in the submatrix corresponding to the wireless charging board region is located in the chassis metal detection matrix of the target vehicle, and numbers of a row and a column in which a matrix element at a central position in the submatrix corresponding to the target charging working region is located in the chassis metal detection matrix of the target vehicle. In this application, a manner of determining the charging misalignment direction and the charging misalignment distance of the wireless charging board based on the wireless charging board region and the target charging working region is not limited.

It may be understood that, because the vehicle chassis is a metal of a large size, when a frontmost end or a rearmost end of the target vehicle arrives above the wireless charging board 10, the wireless charging board 10 may determine real-time charging position misalignment information of the wireless charging board 10 based on a relative position, obtained through real-time detection, of the first detection matrix to the chassis metal induction coil of the target vehicle, thereby expanding an adjustment range during alignment between the target charging working region (for example, the charging receiving board of the target vehicle) and the wireless charging board, that is, expanding an adjustment range in a conventional technology from ± 20 cm to ± 1 m to 2 m, ensuring that a sufficient adjustment space is left for a driver, and achieving high applicability.

Further, when the charging misalignment distance of the wireless charging board 10 is less than a preset charging misalignment distance threshold, that is, the charging misalignment distance of the wireless charging board 10 in the first direction (for example, an X direction) is less than a first charging misalignment distance threshold, and the charging misalignment distance in the second direction (for example, a Y direction) is less than a second charging misalignment distance threshold, it indicates that the wireless charging board 10 is aligned with the target charging working region, and a charging function of the wireless charging board 10 can work normally. In this case, the processor 10 controls the excitation source 10 to stop supplying power to the metal induction coils in the wireless charging board 10, so that the metal induction coils in the wireless charging board 10 stops working, thereby reducing unnecessary power consumption of the wireless charging board 10 in a wireless charging process, and improving charging efficiency. In addition, when the charging misalignment distance of the wireless charging board 10 is less than the preset charging misalignment distance threshold, the processor 10 may further control the transmit conversion module 101 to provide a high-frequency alternating current for the power transmitting coil 102, and the power transmitting coil 102 generates an alternating magnetic field based on the received high-frequency alternating current, so that a case in which the wireless charging board 10 still supplies power to the power transmitting coil 102 when the wireless charging board 10 is not aligned with the target charging working region can be avoided, thereby reducing unnecessary power consumption of the wireless charging board 10 in a wireless charging process, and improving charging efficiency. Further, a case in which a high-strength electromagnetic field generated by the power transmitting coil 102 causes an electromagnetic radiation risk to a person or an animal around the power transmitting coil 102 when power is still supplied to the power transmitting coil 102 during misalignment, thereby improving safety during wireless charging. Then, the power receiving coil 201 in the charging receiving board located above the wireless charging board 10 generates an induced current at a same frequency as a current flowing on the power transmitting coil 102. Then, the receive conversion module 202 performs rectification and direct current conversion on the induced current to obtain a direct current that meets a vehicle charging standard, and outputs the direct current to a power battery of the target vehicle, thereby implementing wireless charging of the target vehicle.

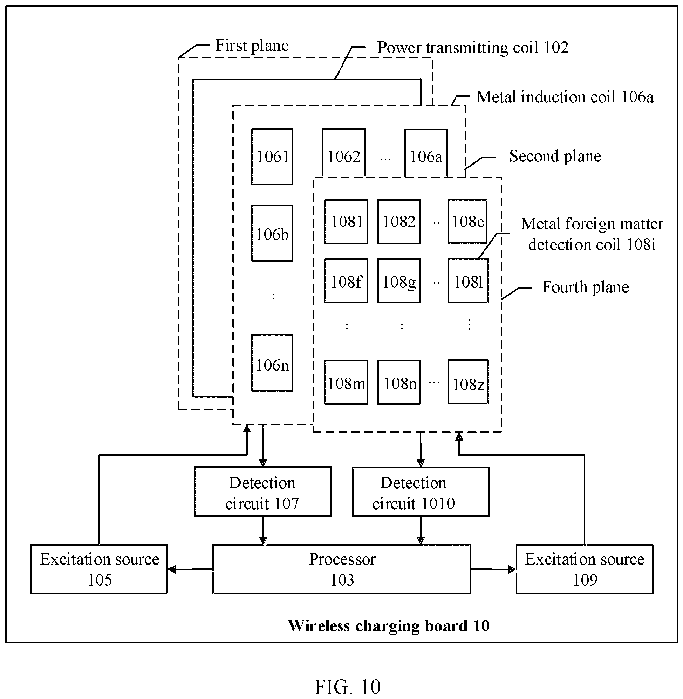

The wireless charging board 10 may further include a plurality of metal foreign matter detection coils. The metal foreign matter detection coils are disposed on a fourth plane in the wireless charging board 10, and the fourth plane is parallel to the first plane. FIG. 10 is a schematic diagram of another structure of a wireless charging board according to this application. As shown in FIG. 10, the wireless charging board 10 further includes metal foreign matter detection coils 1081, 1082, ..., 108e, ..., 108m, 108n, ..., and 108z located on the fourth plane, an excitation source 109, and a detection circuit 1010. The fourth plane is parallel to the first plane. The excitation source 109 is connected to each metal foreign matter detection coil located on the fourth plane, and is configured to provide electric energy for each metal foreign matter detection coil. The detection circuit 1010 is connected to the processor 103 and each metal foreign matter detection coil, and is configured to detect a detected signal (for example, an induced voltage or an induced current) generated by each metal foreign matter detection coil by detecting, through induction, whether a metal foreign matter exists right above the metal foreign matter detection coil.

It should be noted that relative positions between the second plane and the fourth plane are not limited in this application, that is, the second plane may be located above the fourth plane, or may be located below the fourth plane. The metal foreign matter detection coil mainly detects whether a metal foreign matter exists on a surface of the wireless charging board 10, and the metal induction coil mainly detects whether a metal exists on the vehicle chassis. Therefore, a detection range of the metal foreign matter detection coil is less than a detection range of the metal induction coil. To improve detection accuracy of the metal induction coil, an area of an orthographic projection region formed by vertical projection of the metal induction coil on the second plane may be set to be greater than an area of an orthographic projection region formed by vertical projection of the metal foreign matter detection coil on the fourth plane.

When the charging misalignment distance of the wireless charging board 10 is less than the preset charging misalignment distance threshold, the processor 103 may further control the excitation source 109 to supply power to each metal foreign matter detection coil, and send a detection instruction to the detection circuit 1010. Then, each metal foreign matter detection coil starts to detect, through induction, whether a metal foreign matter exists between the metal foreign matter detection coil and the chassis of the target vehicle, and generates a detected signal. At the same time, the detection circuit 1010 detects, based on the received detection instruction, the detected signal generated by each metal foreign matter detection coil, and sends the detected signal generated by each metal foreign matter detection coil to the processor 103. The processor 103 receives the detected signal generated by each metal foreign matter detection coil, and when the detected signal generated by each metal foreign matter detection coil is less than a fourth preset threshold, determines that no metal foreign matter exists between each metal foreign matter detection coil and the chassis of the target vehicle, that is, no metal foreign matter exists between the wireless charging board 10 and the chassis of the target vehicle. Then, the processor 10 controls the transmit conversion module 101 to provide a high-frequency alternating current for the power transmitting coil 102, and the power transmitting coil 102 generates an alternating magnetic field based on the received high-frequency alternating current. A metal foreign matter is detected before charging, so that a case in which the metal foreign matter exists in a region between the wireless charging board 10 and the charging receiving board in a charging process, and the metal foreign matter is heated or even smokes and fires can be avoided, thereby improving safety in the wireless charging process.

In this embodiment of this application, because the vehicle chassis is a metal with a large size, when a frontmost end or a rearmost end of the target vehicle arrives above the wireless charging board 10, the wireless charging board 10 may determine real-time charging position misalignment information of the wireless charging board 10, thereby expanding an adjustment range during alignment between the target charging working region and the wireless charging board 10, and ensuring that a sufficient adjustment space is left for a driver. In addition, because the wireless charging board 10 provided in this application integrates the metal induction coils based on a wireless charging board that has metal foreign matter detection coils, when the wireless charging board 10 needs to perform metal foreign matter detection, the existing metal foreign matter detection coil in the wireless charging board may be directly used for detection without adding an additional hardware sensor to the wireless charging board 10, so that costs of the wireless charging system can be reduced, and applicability is high.

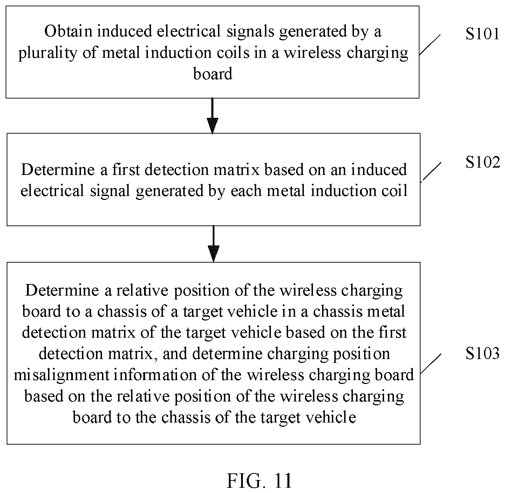

FIG. 11 is a schematic flowchart of a wireless charging board misalignment detection method according to this application. The wireless charging board misalignment detection method provided in this embodiment of this application is applicable to the processor 103 in the wireless charging board 10 shown in FIG. 2 to FIG. 10. The wireless charging board misalignment detection method may include the following steps.

S101: Obtain induced electrical signals generated by a plurality of metal induction coils in a wireless charging board.

Each metal induction coil is disposed on a second plane in the wireless charging board, the second plane is parallel to a first plane on which a power transmitting coil in the wireless charging board is located, and the metal induction coil is configured to detect, through induction, whether a metal exists right above the first metal induction coil and generate an induced electrical signal.

In a feasible implementation, the processor 10 obtains, by using the detection circuit 107, an induced electrical signal generated by each metal induction coil on the second plane.

S102: Determine a first detection matrix based on an induced electrical signal generated by each metal induction coil.

Each matrix element in the first detection matrix is in a one-to-one correspondence with each metal induction coil.

In a feasible implementation, the processor 103 receives the induced electrical signal of each metal induction coil, and determines the first detection matrix in a manner of determining, when the induced electrical signal of the metal induction coil is greater than a first preset threshold, a matrix element corresponding to the metal induction coil in the first detection matrix to be a first value (for example, 1).

S103: Determine a relative position of the wireless charging board to a chassis of a target vehicle in a chassis metal detection matrix of the target vehicle based on the first detection matrix, and determine charging position misalignment information of the wireless charging board based on the relative position of the wireless charging board to the chassis of the target vehicle.

In a feasible implementation, the processor 10 traverses, in the chassis metal detection matrix of the target vehicle, submatrices that have a same quantity of rows and a same quantity of columns as the first detection matrix, determines a submatrix whose matching degree with the first detection matrix is greater than a second preset threshold as a first submatrix, and determines a position of the first submatrix in the chassis metal detection matrix of the target vehicle as the relative position of the wireless charging board 10 to the chassis of the target vehicle.

Then, the processor 10 determines the charging position misalignment information of the wireless charging board 10 based on a target charging working region in the chassis metal detection matrix of the target vehicle and the relative position of the wireless charging board 10 to the chassis of the target vehicle.

The target charging working region may be a region corresponding to a second submatrix in the chassis metal detection matrix of the target vehicle, that is, a corresponding region of a charging receiving board of the target vehicle in the chassis of the target vehicle. A proportion of matrix elements that are the first value in matrix elements of the second submatrix (that is, a ratio of a quantity of matrix elements that are the first value in matrix elements of the second submatrix to a total quantity of matrix elements in the second submatrix) is greater than a third threshold. The target charging working region may alternatively be determined based on the second submatrix corresponding to the charging receiving board of the target vehicle, a maximum allowed misalignment distance Xmax in a first direction and a maximum allowed misalignment distance Ymax in a second direction between the charging receiving board and the wireless charging board, and a first length value x and a second length value y respectively occupied by an orthographic projection region of the metal induction coils in the first direction and the second direction.

In a specific implementation, for more operations performed by the processor 10 in the wireless charging board misalignment detection method provided in this application, refer to the wireless charging board shown in FIG. 2 to FIG. 10 and the implementations performed by the processor 10 in the working principle of the wireless charging board. Details are not described herein again.

In this application, the charging position misalignment information between the wireless charging board and the target charging working region may be determined in real time by using an induced electrical signal generated by each metal induction coil in the wireless charging board located on ground. Because the vehicle chassis is a metal with a large size, when a frontmost end or a rearmost end of the target vehicle arrives above the wireless charging board 10, the wireless charging board 10 may determine real-time charging position misalignment information of the wireless charging board 10, thereby expanding an adjustment range during alignment between the charging receiving board of the target vehicle and the target charging working region, ensuring that a sufficient adjustment space is left for a driver, and achieving high applicability.

The foregoing descriptions are merely specific implementations of the present invention, and not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A wireless charging board, wherein the wireless charging board comprises: a power transmitting coil, a detection circuit, a plurality of metal induction coils, and a processor, wherein
the power transmitting coil is disposed on a first plane in the wireless charging board, and is configured to generate an alternating magnetic field;
the metal induction coil is disposed on a second plane in the wireless charging board, the second plane is parallel to the first plane, and the metal induction coil is configured to detect, through induction, whether a metal exists right above the metal induction coil, and generate an induced electrical signal;
the detection circuit is configured to detect an induced electrical signal generated by each metal induction coil; and
the processor is configured to: determine a first detection matrix based on the induced electrical signal generated by each metal induction coil, wherein each matrix element in the first detection matrix is in a one-to-one correspondence with each metal induction coil; and determine a relative position of the wireless charging board to a chassis of a target vehicle in a chassis metal detection matrix of the target vehicle based on the first detection matrix, and determine charging position misalignment information of the wireless charging board based on the relative position of the wireless charging board to the chassis of the target vehicle.

2. The wireless charging board according to claim 1, wherein the processor is configured to:
when the induced electrical signal generated by the metal induction coil is greater than a first preset threshold, determine a matrix element corresponding to the metal induction coil in the first detection matrix to be a first value.

3. The wireless charging board according to claim 1, wherein the chassis metal detection matrix of the target vehicle is obtained by a metal detection device by detecting the chassis of the target vehicle, the metal detection device comprises a plurality of metal induction coils, the plurality of metal induction coils in the metal detection device are disposed on a third plane in the metal detection device, the plurality of metal induction coils in the metal detection device are orthogonally distributed on the third plane, the plurality of metal induction coils in the wireless charging board are orthogonally distributed on the second plane, and a distance between adjacent metal induction coils on the third plane is the same as a distance between adjacent metal induction coils on the second plane.

4. The wireless charging board according to claim 1, wherein the processor is configured to:
determine, from the chassis metal detection matrix of the target vehicle, a first submatrix whose matching degree with the first detection matrix is greater than a second preset threshold; and
determine a position of the first submatrix in the chassis metal detection matrix of the target vehicle as the relative position of the wireless charging board to the chassis of the target vehicle.

5. The wireless charging board according to any one of claims 1 to 4, wherein the determining, by the processor, charging position misalignment information of the wireless charging board based on the relative position of the wireless charging board to the chassis of the target vehicle comprises:
determining, by the processor, the charging position misalignment information of the wireless charging board based on a target charging working region in the chassis metal detection matrix of the target vehicle and the relative position of the wireless charging board to the chassis of the target vehicle.

6. The wireless charging board according to claim 5, wherein the target charging working region is determined based on a second submatrix in the chassis metal detection matrix of the target vehicle, and a proportion of matrix elements that are the first value in matrix elements of the second submatrix is greater than a third preset threshold.

7. The wireless charging board according to any one of claims 1 to 6, wherein the charging position misalignment information comprises a charging misalignment direction and/or a charging misalignment distance.

8. The wireless charging board according to claim 7, wherein the processor is further configured to: when the charging misalignment distance comprised in the charging position misalignment information is less than a preset charging misalignment distance threshold, control the plurality of metal induction coils to stop working.

9. The wireless charging board according to claim 7, wherein the processor is further configured to: when the charging misalignment distance comprised in the charging position misalignment information is less than a preset charging misalignment distance threshold, control the power transmitting coil to generate an alternating magnetic field.

10. The wireless charging board according to any one of claims 1 to 9, wherein the processor is further configured to: obtain first vehicle information of the target vehicle, and determine, from a vehicle chassis matrix detection matrix set, a chassis metal detection matrix corresponding to the first vehicle information, wherein the vehicle chassis detection matrix set comprises a plurality of chassis metal detection matrices and vehicle information corresponding to each chassis metal detection matrix.

11. The wireless charging board according to any one of claims 1 to 10, wherein the wireless charging board further comprises a plurality of metal foreign matter detection coils, the metal foreign matter detection coils are disposed on a fourth plane in the wireless charging board, and the fourth plane is parallel to the first plane.

12. The wireless charging board according to claim 11, wherein the processor is further configured to: when the charging misalignment distance comprised in the charging position misalignment information is less than the preset charging misalignment distance threshold, control the plurality of metal foreign matter detection coils to start to work.

13. The wireless charging board according to claim 12, wherein the processor is further configured to: when determining, based on detected signals of the plurality of metal foreign matter detection coils, that no metal foreign matter exists between the wireless charging board and the chassis of the target vehicle, control the power transmitting coil to start to generate an alternating magnetic field.

14. A wireless charging board misalignment detection method, wherein the method comprises:
obtaining induced electrical signals generated by a plurality of metal induction coils in a wireless charging board, wherein the metal induction coil is disposed on a second plane in the wireless charging board, the second plane is parallel to a first plane on which a power transmitting coil in the wireless charging board is located, and the metal induction coil is configured to detect, through induction, whether a metal exists right above the first metal induction coil and generate an induced electrical signal;
determining a first detection matrix based on an induced electrical signal generated by each metal induction coil, wherein each matrix element in the first detection matrix is in a one-to-one correspondence with each metal induction coil; and
determining a relative position of the wireless charging board to a chassis of a target vehicle in a chassis metal detection matrix of the target vehicle based on the first detection matrix, and determining charging position misalignment information of the wireless charging board based on the relative position of the wireless charging board to the chassis of the target vehicle.

15. The method according to claim 14, wherein the determining a first detection matrix based on an induced electrical signal generated by each metal induction coil comprises:
when the induced electrical signal generated by the metal induction coil is greater than a first preset threshold, determining a matrix element corresponding to the metal induction coil in the first detection matrix to be a first value.

16. The method according to claim 14, wherein the chassis metal detection matrix of the target vehicle is obtained by a metal detection device by detecting the chassis of the target vehicle, the metal detection device comprises a plurality of metal induction coils, the plurality of metal induction coils in the metal detection device are disposed on a third plane in the metal detection device, the plurality of metal induction coils in the metal detection device are orthogonally distributed on the third plane, the plurality of metal induction coils in the wireless charging board are orthogonally distributed on the second plane, and a distance between adjacent metal induction coils on the third plane is the same as a distance between adjacent metal induction coils on the second plane.

17. The method according to claim 14, wherein the determining a relative position of the wireless charging board to a chassis of a target vehicle in a chassis metal detection matrix of the target vehicle based on the first detection matrix comprises:
determining, from the chassis metal detection matrix of the target vehicle, a first submatrix whose matching degree with the first detection matrix is greater than a second preset threshold; and
determining a position of the first submatrix in the chassis metal detection matrix of the target vehicle as the relative position of the wireless charging board to the chassis of the target vehicle.

18. The method according to any one of claims 14 to 17, wherein the determining charging position misalignment information of the wireless charging board based on the relative position of the wireless charging board to the chassis of the target vehicle comprises:
determining the charging position misalignment information of the wireless charging board based on a target charging working region in the chassis metal detection matrix of the target vehicle and the relative position of the wireless charging board to the chassis of the target vehicle.

19. The method according to claim 18, wherein the target charging working region is determined based on a second submatrix in the chassis metal detection matrix of the target vehicle, and a quantity or proportion of matrix elements that are the first value in matrix elements of the second submatrix is greater than a third preset threshold.

20. The method according to any one of claims 14 to 19, wherein the charging position misalignment information comprises a charging misalignment direction and/or a charging misalignment distance.

21. The method according to claim 20, wherein the method further comprises:
when the charging misalignment distance comprised in the charging position misalignment information is less than a preset charging misalignment distance threshold, controlling the plurality of metal induction coils to stop working.

22. The method according to claim 20, wherein the method further comprises:
when the charging misalignment distance comprised in the charging position misalignment information is less than a preset charging misalignment distance threshold, controlling the power transmitting coil to generate an alternating magnetic field.

23. The method according to any one of claims 14 to 22, wherein the method further comprises:
obtaining first vehicle information of the target vehicle, and determining, from a vehicle chassis matrix detection matrix set, a chassis metal detection matrix corresponding to the first vehicle information, wherein the vehicle chassis detection matrix set comprises a plurality of chassis metal detection matrices and vehicle information corresponding to each chassis metal detection matrix.

24. The method according to any one of claims 14 to 23, wherein the wireless charging board further comprises a plurality of metal foreign matter detection coils, the metal foreign matter detection coils are disposed on a fourth plane in the wireless charging board, and the fourth plane is parallel to the first plane.

25. The method according to claim 24, wherein the method further comprises:
when the charging misalignment distance comprised in the charging position misalignment information is less than the preset charging misalignment distance threshold, controlling the plurality of metal foreign matter detection coils to start to work.

26. The method according to claim 25, wherein the method further comprises:
when determining, based on detected signals of the plurality of metal foreign matter detection coils, that no metal foreign matter exists between the wireless charging board and the chassis of the target vehicle, controlling the power transmitting coil to start to generate an alternating magnetic field.

27. A wireless charging system, wherein the wireless charging system comprises a charging receiving board and the wireless charging board according to any one of claims 1 to 13, the charging receiving board comprises a power receiving coil, and the power receiving coil is configured to transfer energy to each other with the power transmitting coil through electromagnetic mutual induction.
